# EUROPÄISCHE PATENTANMELDUNG

(11) **EP 1 384 870 A2**
(43) Veröffentlichungstag der Anmeldung: **28.01.2004**
(21) Anmeldenummer: 03012572.8
(22) Anmeldetag: 03.06.2003
(51) Int. Cl.: F02B 23/10

(54) **Fremdgezündete, direkteinspritzende Brennkraftmaschine**

(30) Priorität: 27.07.2002 DE 10234215
(71) Anmelder: Bayerische Motoren Werke Aktiengesellschaft, 80809 München (DE)
(72) Erfinder: Albrecht, Thomas, 80796 München (DE); Hoss, Bernhard, 82131 Gauting (DE); Kern, Wolfgang, Dr., 81241 München (DE); Preuss, Florian, 80809 München (DE); Bacher, Heinz, 86159 Augsburg (DE); Hübner, Walter, 85591 Vaterstetten (DE); Witt, Andreas, Dr., 80995 München (DE); Abdelfattah, Aschraf, Dr., 80939 München (DE); Durst, Bodo, Dr., 80993 München (DE)

(57) **Zusammenfassung**

Fremdgezündete, direkt einspritzende Brennkraftmaschine mit zumindest einem Zylinder (1) mit einem Brennraum (2), in dem während einer Ansaugphase vorwiegend eine Walzenströmung (6) vorherrscht und mit einem Zylinderkopf (3), in dem ein weitgehend in der Zylinderachse (1a) ausgerichtetes Brennstoff-Einspritzventil (7), das den Brennstoff in zumindest einem Brennstoffkegel (10) direkt in den Brennraum (2) abspritzt, sowie davon radial entfernt eine Zündeinrichtung (8) mit zumindest einer in den Brennraum (2) ragenden Zündelektrode (9), angeordnet sind, wobei die Zündelektrode (9) nicht in den Brennstoffkegel (10) hineinragt und die Walzenströmung (6) weitgehend nur ein gasförmiges Brennstoff-/Luftgemisch (10a) in die Nähe der Zündelektrode (9) transportiert.

Durch die erfindungsgemäße Ausgestaltung wird ein Verrußen der Zündelektrode vermieden, sowie ein sicheres Zünden der direkt einspritzenden Brennkraftmaschine gewährleistet.

## Beschreibung

Die Erfindung betrifft eine fremdgezündete, direkt einspritzende Brennkraftmaschine, gemäß der Merkmale im Oberbegriff des Patentanspruchs 1.

Die Erfindung geht von der deutschen Patentschrift DE 197 13 028 C2 aus. In dieser ist eine direkteinspritzende Viertakt-Brennkraftmaschine mit Fremdzündung beschrieben. Der Zylinderkopf verfügt über zwei Einlassventile und zwei Auslassventile, zwischen denen weitestgehend zentral ein Kraftstoff-Einspritzventil angeordnet ist. Dieses ist gegenüber der Zylinderachse leicht geneigt und spritzt den Brennstoff in einem Kegel in Richtung des Kolbens und der Auslassventile ab. Weiter ist im Zylinderkopf ausgehend von dem Kraftstoff-Einspritzventil in Richtung der Auslassventile eine Zündkerze angeordnet. Sowohl die Zündelektrode als auch die Masseelektrode der Zündkerze ragen in den Brennraum und weisen in Richtung der Zylinderachse. Der Kolben verfügt über eine U-förmige Mulde, die eine beim Ansaughub generierte Walzenströmung im Brennraum verstärkt. Beim Betrieb der Brennkraftmaschine spritzt das Kraftstoff-Einspritzventil den Kraftstoff direkt in den Zylinder in Richtung Kolbenboden und benetzt die Zündkerzenelektroden. Der flüssige Brennstoff prallt teilweise auf dem Kolben auf und wird von der Walzenströmung anschließend in Richtung Zündkerze transportiert, so dass zum Zündzeitpunkt an der Zündkerze ein brennfähiges Kraftstoff-/Luft-Gemisch vorliegt.

Nachteilig an der beschriebenen Ausgestaltung ist die Benetzung der Zündelektrode mit flüssigem Kraftstoff, was zu einer Verrußung der Zündelektrode und somit zu einer Verschlechterung der Zündeigenschaften führt.

Aufgabe der vorliegenden Erfindung ist es, die aufgezeigten Nachteile zu vermeiden.

Diese Aufgabe wird durch die Merkmale im kennzeichnenden Teil des Patentanspruchs 1 gelöst.
Da die Zündelektrode nicht in den Brennstoffkegel, der von flüssigen Kraftstoffpartikeln gebildet wird, hineinragt, sondern von diesem beabstandet ist, kommt es zu keiner Benetzung der Zündelektrode mit flüssigem Brennstoff. Die Masseelektrode kann jedoch, muss aber nicht in den Brennstoffkegel eintauchen. Somit wird ein Verrußen der Zündelektrode vermieden und eine zuverlässige Zündung des gasförmigen Brennstoff-/Luft-Gemisches ist gesichert. Beim Abspritzen des Brennstoffes aus dem Brennstoff-Einspritzventil treten die flüssigen Brennstoffpartikel mit einem hohen Impuls aus dem Brennstoff-Einspritzventil aus. Die Partikelgeschwindigkeiten betragen am Düsenaustritt bis zu ca. 150 m/s. Demgegenüber beträgt die Walzenströmungsgeschwindigkeit am Umfang nur bis ca. 10 m/s. Der Einspritzzeitpunkt ist so gewählt, dass eine Kolbenbenetzung weitestgehend vermieden wird, so dass eine Rußbildung durch unverbrannte Kohlenwasserstoffe kaum stattfindet. Darüber hinaus wirkt das Zusammenspiel der flüssigen Brennstoffpartikel mit der Walzenströmung wie ein Zyklonabscheider. Nach Austritt der flüssigen Brennstoffpartikel aus dem Brennstoff-Einspritzventil mit einem Tropfengrößenspektrum, bilden sich am Umfang des Brennstoffkegels Rezirkulationsgebiete aus, in denen sich ein gasförmiges Brennstoff-/Luftgemisch bildet und die größeren flüssigen Brennstoffpartikel die Walzenströmung nahezu unbeeinflusst durchdringen, während das gasförmiges Brennstoff-/Luft-Gemisch sowie kleinste flüssige Brennstoffpartikel durch die Walzenströmung in Richtung Zündkerzenelektrode gefördert werden. Während das gasförmige Brennstoff-/Luft-Gemisch ein sicheres Entzünden der Gemischwolke erlaubt, verdampfen die noch flüssigen Brennstoffpartikel bis zum Ende der Entflammungsphase weitestgehend, um anschließend sauber und weitgehend ohne Rußbildung zu verbrennen.

Eine Ausgestaltung des Zylinderkopfes gemäß der Patentansprüche 2 bis 5 gestattet dem Konstrukteur die optimale Anpassung von Einlasskanalgeometrie und Einlassventilgeometrie, zur Erzeugung einer Walzenströmung im Brennraum, die zur zyklonartigen Trennung von flüssigem und gasförmigem Brennstoff geeignet ist. Da das Brennverfahren ein weitgehend strahlgeführtes Brennverfahren ist, wird eine Wandbenetzung mit flüssigem Brennstoff weitestgehend vermieden. In vorteilhafter Weise ist die Kolbenoberfläche nicht mit einer komplizierten Geometrie als Brennstoffleitelement wie im Stand der Technik auszulegen, sondern es ist eine relativ einfache Kolbenoberfläche für dieses Brennverfahren einsetzbar. Je nach räumlicher Anordnung von Brennstoff-Einspritzventil und Zündelektrode können die Einlass-Gaswechselventilachse sowie die Einlasskanalachse in weiten Winkelbereichen zu einander angeordnet sein, um die geeignetste Walzenströmung im Brennraum zu erzeugen.

Die räumliche Lage des Brennstoff-Einspritzventils gemäß Patentanspruch 6 gewährleistet, dass das gasförmige Brennstoff-/Luft-Gemisch stets die Zündelektrode erreicht.

Die Lage der Zündelektrode gemäß Patentanspruch 7 verhindert die Benetzung der Zündelektrode mit flüssigem Brennstoff weitgehend, wodurch eine Verrußung sowie eine Zerstörung der Zündelektrode und ihrer keramischen Fassung durch Thermosschock vermieden wird. Da der Brennstoffkegel-Öffnungswinkel vom Einspritzzeitpunkt, entsprechend einem homogenen, bzw. einem geschichteten Betrieb der Brennkraftmaschine und somit neben weiteren Faktoren auch vom Brennraumgegendruck abhängig ist, kann die Zündelektrode durch diese Anordnung höchstens für wenige einzelne Zyklen aufgrund transienter Strömungsvorgänge in den Brennstoffkegel eintauchen. Da in diesem kurzen Zeitraum keine Verrußung stattfindet, ist auch für diesen kurzfristigen Betriebszustand eine sichere Zündung sowie eine saubere Verbrennung gewährleistet.

Eine Einspritzstrategie gemäß Patentanspruch 10 verbessert die Zyklonwirkung im Brennraum. Eine erste Teilmenge Brennstoff wird sehr früh in den Brennraum eingespritzt und das gasförmige Brennstoff-/Luft-Gemisch wird von der Walzenströmung in Richtung Zündelektrode transportiert. Später, im selben Zyklus wird zumindest eine zweite Teilmenge Brennstoff in den Brennraum eingespritzt. Durch diese Maßnahme wird vor allem im Teillastbereich die Bereitstellung eines zündfähigen Brennstoff-/Luft-Gemisches im Bereich der Zündelektrode erreicht.

Im Folgenden ist die Erfindung anhand eines bevorzugten Ausführungsbeispieles in zwei Figuren näher erläutert.
- Fig. 1: zeigt schematisch einen Schnitt durch einen Brennraum 2 einer nicht näher dargestellten, direkt einspritzenden Brennkraftmaschine während eines Ansaughubes;
- Fig. 2: zeigt schematisch einen Schnitt durch einen Brennraum 2 einer nicht näher dargestellten, direkt einspritzenden Brennkraftmaschine während eines Kompressionshubes.

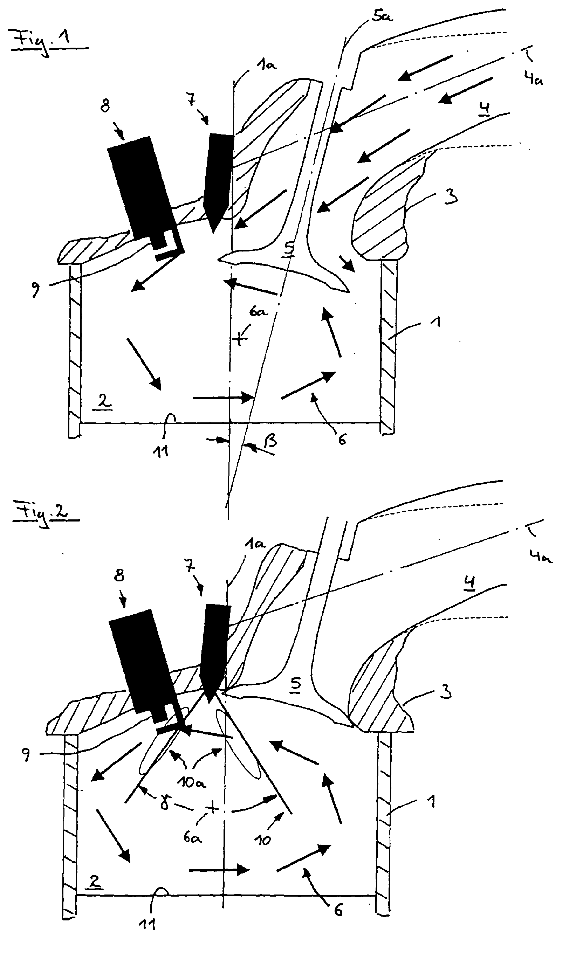

Fig. 1 zeigt schematisch einen Schnitt durch einen Brennraum 2 einer nicht näher dargestellten, direkt einspritzenden Brennkraftmaschine während eines Ansaughubes. Die Bezugszeichen von Fig. 1 gelten auch für die selben Bauteile in Fig. 2. Der Brennraum 2 ist radial durch einen Zylinder 1 mit einer Zylinderachse 1a und in Richtung der Zylinderachse 1a einerseits von einem Kolbenboden 11 und andererseits von einem Zylinderkopf 3 begrenzt. In dem Zylinderkopf 3 befindet sich ein Einlasskanal 4 mit einer Einlasskanalachse 4a, der gegenüber dem Brennraum von zwei Einlass-Gaswechselventilen 5, mit einer Einlass-Gaswechselventilachse 5a verschließbar ist. Dargestellt ist nur das in Blickrichtung vordere Einlass-Gaswechselventil 5. Der Zylinderkopf 3 ist ein Vierventilzylinderkopf mit zwei Einlass-Gaswechselventilen 5, sowie zwei nicht dargestellten Auslass-Gaswechselventilen. Die Einlass-Gaswechselventile 5, 5' sind in Fig. 1 geöffnet und der Kolben befindet sich in einer Abwärtsbewegung, d. h. er entfernt sich von dem Einlasskanal 4. Die Ansaug-Gasströmung ist durch Pfeile dargestellt. Im Brennraum 2 bildet die Gasströmung eine ebenfalls durch Pfeile gekennzeichnete Walzenströmung 6 mit einer Walzenströmungsachse 6a. Diese ist weitgehend in einer Ebene ausgerichtet, die durch die zwei Einlass-Gaswechselventile 5 definiert wird. Haupteinfluss auf die Lage der Walzenströmungsachse 6a hat vor allen ein Anteil einer nicht dargestellten Drallströmung im Brennraum um die Zylinderachse 1a. Im Zylinderkopf 3 ist nahe der Zylinderachse 1a ein Brennstoff-Einspritzventil 7, weitgehend in Richtung der Zylinderachse 1a ausgerichtet, angeordnet.

Fig. 2 zeigt schematisch den gleichen Schnitt wie Fig. 1 durch den Brennraum 2 während eines Kompressionshubes. Gegenüber Fig. 1 ist das Einlass-Gaswechselventil 5 geschlossen und der Kolbenboden 11 bewegt sich in Richtung Einlasskanal 4. Im Brennraum 2 herrscht immer noch die durch Pfeile gekennzeichnete Walzenströmung 6. Das Brennstoff-Einspritzventil 7 spritzt den flüssigen Brennstoff in einem Brennstoffkegel 10 direkt in den Brennraum 2 in Richtung des Kolbenbodens 11 ab. Die flüssigen Brennstoffpartikel breiten sich in Form eines Mantelkegels im Brennraum 2 aus. Im Randbereich des Brennstoffkegels 10 bildet der verdampfte Brennstoff aufgrund von Rezirkulationsgebieten in diesem Bereich ein gasförmiges Brennstoff-/Luft-Gemisch 10a. Dieses gasförmige Brennstoff-/Luft-Gemisch 10a wird von der Walzenströmung 6 in Richtung einer ebenfalls im Zylinderkopf 3 angeordneten Zündelektrode 9 einer Zündeinrichtung 8, hier einer Zündkerze, transportiert. Die Zündeinrichtung ist ausgehend von dem Brennstoff-Einspritzventil 7 in Richtung der nicht dargestellten Auslass-Gaswechselventile angeordnet und ragt in den Brennraum 2. Die Zündelektrode 9 taucht aber nicht direkt in den Brennstoffkegel 10 ein.

Beim Betrieb der Brennkraftmaschine wird für jeden Verbrennungszyklus Frischgas in dem Brennraum 2 angesaugt. Das Frischgas wird bei diesem Vorgang aufgrund der Geometrie des Einlasskanals 4 sowie der Geometrie und der Lage der Einlass-Gaswechselventile 5 umgelenkt. Entsprechend der Lage der Einlasskanalachse 4a in Verbindung mit der Einlass-Gaswechselventilachse 5a bildet sich im Brennraum die Walzenströmung 6 aus. Durch Veränderung eines Einlasswinkels α, der Winkel zwischen der Zylinderachse 1a und der Einlasskanalachse 4a sowie des Winkels β , der Winkel zwischen der Zylinderachse 1a und der Einlass-Gaswechselventilachse 5a, wird nicht nur die Lage der Walzenströmung 6 im Brennraum verändert, sondern wesentlich auch die Frischgas-Strömungsgeschwindigkeit. Diese kann in großen Bereichen am Umfang bis zu 10 m/s betragen, lokal auch darüber. Entscheidend bei der Auslegung der Winkel α und β ist, dass die Frischgas-Strömung im Brennraum 2 die flüssigen Brennstofftropfen, deren Geschwindigkeit bis zu 150 m/s an der Austrittsöffnung des tropfen, deren Geschwindigkeit bis zu 150 m/s an der Austrittsöffnung des Brennstoff-Einspritzventils 7 betragen kann, im Brennstoffkegel 10 in ihrer Flugbahn kaum beeinflusst, während der bereits verdampfte Brennstoff, der vor allem aus den Rezirkulationsgebieten stammt und mit dem Frischgas ein zündfähiges und gasförmiges Brennstoff-/Luft-Gemisch 10a gebildet hat, von der Walzenströmung 6 in Richtung der Zündelektrode 9 transportiert wird.

Da die Brennstoff-Tropfengröße einen wesentlichen Einfluss auf diesen zyklonartigen Trennvorgang hat, ist diese bei der Auslegung der oben genannten Winkel ebenfalls mit in Betracht zu ziehen. Der Brennstoffkegel 10, der wesentlich von den geometrischen Abmessungen eines Abspritzbereichs des Brennstoff-Einspritzventils 7 abhängt, ist so auszulegen, dass er unter normalen Einspritzbedingungen, d. h. bei Einspritzung in unterschiedliche Druckverhältnisse im Brennraum 2, von Atmosphärendruck bis zu Hochdruck während der Kompressionsphase, die Zündelektrode 9 nicht berührt. Da der Brennstoffkegel-Öffnungswinkel γ bei Einspritzung in hohen Druck kleiner ist, ist auch bei später Einspritzung, d. h. kurz vor dem Zündzeitpunkt, gewährleistet, dass der Brennstoffkegel 10 die Zündelektrode 9 nicht berührt und somit eine Verrußung der Zündelektrode 9 vermieden ist.

Im vorliegenden Beispiel beträgt der Einlasswinkel α etwa 70°, er kann jedoch zwischen 10° und 90° betragen. Der Ventilwinkel β beträgt 20°, er kann jedoch auch zwischen 0° und 60° liegen. Der Brennstoffkegel 10 hat im Ausführungsbeispiel einen Brennstoffkegel-Öffnungswinkel von 70°, kann allerdings auch minimal 50° und maximal 120° betragen. Anstelle des Vierventilzylinderkopfes sind in weiteren Ausführungsbeispielen auch eine andere Anzahl von Einlass-Gaswechselventilen 5, z. B. drei oder fünf je Zylinder denkbar. Zu beachten ist hierbei, dass sich die Walzenströmungsachse 6a sowohl bei einer Veränderung der Ansaug- oder Brennraumgeometrie, als auch bei einer Veränderung der Anzahl von Gaswechselventilen verlagern kann. Bei größeren Veränderungen der Ansaug- oder Brennraumgeometrie kann im Brennraum 2 auch die Drehrichtung der Walzenströmung umgedreht werden, was jedoch an der Zyklonwirkung nichts ändert. Das Brennstoff-Einspritzventil 7 ist im Ausführungsbeispiel nahezu zentrisch im Brennraum 2 angeordnet, kann aber auch exzentrisch, sowie zur Zylinderachse 1a geneigt angeordnet sein.

### Bezugszeichenliste

- 1: Zylinder
- 1a: Zylinderachse
- 2: Brennraum
- 3: Zylinderkopf
- 4: Einlasskanal
- 4a: Einlasskanalachse
- 5: Einlass-Gaswechselventil
- 5a: Einlass-Gaswechselventilachse
- 6: Walzenströmung
- 6a: Walzenströmungsachse
- 7: Brennstoff-Einspritzventil
- 8: Zündeinrichtung
- 9: Zündelektrode
- 10: Brennstoffkegel
- 10 a: Gasförmiges Brennstoff-/Luftgemisch
- 11: Kolbenboden

## Patentansprüche

1. Fremdgezündete, direkt einspritzende Brennkraftmaschine mit zumindest einem Zylinder (1) mit einem Brennraum (2), in dem während einer Ansaugphase vorwiegend eine Walzenströmung (6) vorherrscht und mit einem Zylinderkopf (3), in dem ein weitgehend in der Zylinderachse (1a) ausgerichtetes Brennstoff-Einspritzventil (7), das den Brennstoff in zumindest einem Brennstoffkegel (10) direkt in den Brennraum (2) abspritzt, sowie davon radial entfernt eine Zündeinrichtung (8) mit zumindest einer in den Brennraum (2) ragenden Zündelektrode (9), angeordnet sind,
**dadurch gekennzeichnet, dass** die Zündelektrode (9) nicht in den Brennstoffkegel (10) hineinragt und die Walzenströmung (6) weitgehend nur ein gasförmiges Brennstoff/Luft-Gemisch (10a) in die Nähe der Zündelektrode (9) transportiert.

2. Vorrichtung nach Patentanspruch 1, wobei der Zylinderkopf zumindest einen Einlasskanal (4) und zumindest zwei Einlass-Gaswechselventile (5, 5') aufweist,
**dadurch gekennzeichnet, dass** die Walzenströmung (6) vorwiegend von dem Einlasskanal (4) in Verbindung mit den Einlass-Gaswechselventilen (5, 5') gebildet wird.

3. Vorrichtung nach Patentanspruch 1 oder 2, wobei die Zylinderachse (1a) mit einer Einlasskanalachse (4a) einen Einlasswinkel α und mit einer Einlass-Gaswechselventilachse (5a) einen Ventilwinkel β bildet,
**dadurch gekennzeichnet, dass** die Walzenströmung (6) durch Veränderung des Einlasswinkels α und/oder des Ventilwinkels β veränderbar ist.

4. Vorrichtung nach einem der Patentansprüche 1 bis 3,
**dadurch gekennzeichnet, dass** der Einlasswinkel α zwischen 10° und 90° beträgt.

5. Vorrichtung nach einem der Patentansprüche 1 bis 4,
**dadurch gekennzeichnet, dass** der Ventilwinkel β zwischen 0° und 60° beträgt.

6. Vorrichtung nach einem der Patentansprüche 1 bis 5,
**dadurch gekennzeichnet, dass** das Brennstoff-Einspritzventil (7) höchstens 25 mm radial von der Zylinderachse (1a) beabstandet ist.

7. Vorrichtung nach einem der zuvor genannten Patentansprüche,
**dadurch gekennzeichnet, dass** die Zündelektrode (9) weniger als 1 mm von dem Brennstoffkegel (10) beabstandet ist.

8. Vorrichtung nach einem der zuvor genannten Patentansprüche,
**dadurch gekennzeichnet, dass** die Zündelektrode (9) weniger als 25 mm von dem Brennstoff-Einspritzventil (7) beabstandet ist.

9. Vorrichtung nach einem der zuvor genannten Patentansprüche, wobei der Brennstoffkegel einen Öffnungswinkel γ bildet,
**dadurch gekennzeichnet, dass** der Öffnungswinkel γ minimal 50° und maximal 120° beträgt.

10. Vorrichtung nach einem der zuvor genannten Patentansprüche, wobei für jeden Verbrennungszyklus eine definierte Brennstoffmenge eingespritzt wird,
**dadurch gekennzeichnet, dass** die Brennstoffmenge in Teilmengen einspritzbar ist.
